# EUROPEAN PATENT APPLICATION

(11) **EP 4 293 385 A1**
(43) Date of publication of application: **20.12.2023**
(21) Application number: 23178223.6
(22) Date of filing: 08.06.2023
(51) Int. Cl.: G01S 7/481, G01S 17/89

(54) **DYNAMIC UTILIZATION OF BROAD-SPECTRUM PHOTOSENSOR**

(30) Priority: 13.06.2022 US 202217838819
(71) Applicant: Datalogic IP Tech S.r.l., 40012 Lippo di Calderara di Reno (BO) (IT)
(72) Inventor: MARIOSA, Gianfranco, 40122 Bologna (BO) (IT); BAGALÀ, Fabio, 40013 Castel Maggiore (BO) (IT)
(74) Representative: Riccardi, Elisa

(57) **Abstract**

In an optical sensing system, illumination light is selectively emitted by an illumination system at a selected wavelength from among a set of available wavelengths including a first wavelength, and a second wavelength that is different from the first wavelength, to illuminate a target area. The portion of the emitted light that is reflected from the target area is received by a photosensor that is sensitive in a range that includes the first wavelength and the second wavelength. A preferred at least one wavelength of the selective light emission is autonomously selected from among the first wavelength and the second wavelength based on assessed comparative performance of the photosensor in conjunction with the emitted light of the first wavelength and of the second wavelength in currently prevailing conditions.

## Description

### TECHNICAL FIELD

The present disclosure generally relates to optical sensing and automated vision and, more particularly, to sensing objects or capturing images under a variety of variable conditions.

### BACKGROUND

Optical sensing using photosensors (e.g., photoelectric, CMOS, CCD, photoresistive, LED, etc.) is used in a wide variety of devices for an even greater variety of applications. Some of these applications include object or proximity detection, symbol reading, imaging, 3D scanning (e.g., LiDAR), machine vision, and the like.

Designers of photosensor-based systems face a number of challenges related to the use of the photosensor under variable conditions. For instance, variable conditions may include ambient light conditions, specular reflections, environmental conditions such as particulates (e.g., smoke, dust), rain, fog, snow, dirt or other residue on windows/lenses of the optical sensing system, obstructions, or the like. Such variable conditions can adversely affect the signal-to-noise ratio of the photosensor, which in turn may result in reduction of sensitivity, precision, or produced image quality, of the photosensor.

### SUMMARY

One aspect of this disclosure is directed to an optical sensing system that includes an illumination system having a plurality of photo emitters. The illumination system includes a first group of at least one photo emitter selectively operative to emit light at a first wavelength, and a second group of at least one photo emitter selectively operative to emit light at a second wavelength that is different from the first wavelength. The system further includes a photosensor having sensitivity over a range of wavelengths that includes an ultraviolet band and an infrared band, wherein the range includes the first wavelength and the second wavelength. The illumination system and the photosensor are arranged such that emitted light from the illumination system is directed towards a target area, and a portion of the emitted light is reflected from the target area and received by the photosensor.

Further, the system includes control circuitry operatively coupled to the illumination system and to the photosensor. The control circuitry is operative to autonomously select a preferred at least one wavelength of the emitted light from among the first wavelength and the second wavelength based on assessed comparative performance of the photosensor in conjunction with the emitted light of the first wavelength and of the second wavelength in currently prevailing conditions.

In a related aspect, a method for operating an optical sensing system includes: selectively emitting light, by an illumination system, at a selected wavelength from among a set of available wavelengths including first wavelength, and a second wavelength that is different from the first wavelength, to illuminate a target area. Reflected light is received from target area based on the selectively-emitted light by a photosensor that is sensitive in a range that includes the first wavelength and the second wavelength. Further, the method includes autonomously selecting a preferred at least one wavelength of the selective light emission from among the first wavelength and the second wavelength based on assessed comparative performance of the photosensor in conjunction with the emitted light of the first wavelength and of the second wavelength in currently prevailing conditions. The photosensor may be sensitive over a range that includes an ultraviolet band and an infrared band.

### BRIEF DESCRIPTION OF THE DRAWINGS

FIG. 1 is a diagram illustrating an example photosensor-based optical sensing system according to some embodiments.
FIGs. 2A-2B illustrate various physical configurations of the photosensor-based optical sensing system of FIG. 1 according to related embodiments.
FIG. 3 is a high-level block diagram illustrating an example system architecture of the optical sensing system of FIG. 1 according to some embodiments.
FIG. 4 is a simplified block diagram illustrating a portion of processing hardware of control circuitry of the optical sensing system of FIG. 1 according to an example embodiment.
FIG. 5 is a high-level state diagram illustrating a simplified operational regime of control circuitry of the optical sensing system of FIG. 1 according to an example embodiment.
FIG. 6 is a flow diagram illustrating some of the operations of a condition evaluation phase and an illumination wavelength selection phase of operation, which may be carried out by control circuitry of the optical sensing system of FIG. 1 according to some embodiments.

### DETAILED DESCRIPTION

The illustrations included herewith are not meant to be actual views of any particular systems, memory device, architecture, or process, but are merely idealized representations that are employed to describe embodiments herein. Elements and features common between figures may retain the same numerical designation except that, for ease of following the description, for the most part, reference numerals begin with the number of the drawing on which the elements are introduced or most fully described. In addition, the elements illustrated in the figures are schematic in nature, and many details regarding the physical layout and construction of a memory array and/or all steps necessary to access data may not be described as they would be understood by those of ordinary skill in the art.

As used herein, the singular forms "a," "an," and "the" are intended to include the plural forms as well, unless the context clearly indicates otherwise.

As used herein, "or" includes any and all combinations of one or more of the associated listed items in both, the conjunctive and disjunctive senses. Any intended descriptions of the "exclusive-or" relationship will be specifically called out.

As used herein, the term "configured" refers to a structural arrangement such as size, shape, material composition, physical construction, logical construction (e.g., programming, operational parameter setting) or other operative arrangement of at least one structure and at least one apparatus facilitating the operation thereof in a defined way (e.g., to carry out a specific function or set of functions).

As used herein, the phrases "coupled to" or "coupled with" refer to structures operatively connected with each other, such as connected through a direct connection or through an indirect connection (e.g., via another structure or component).

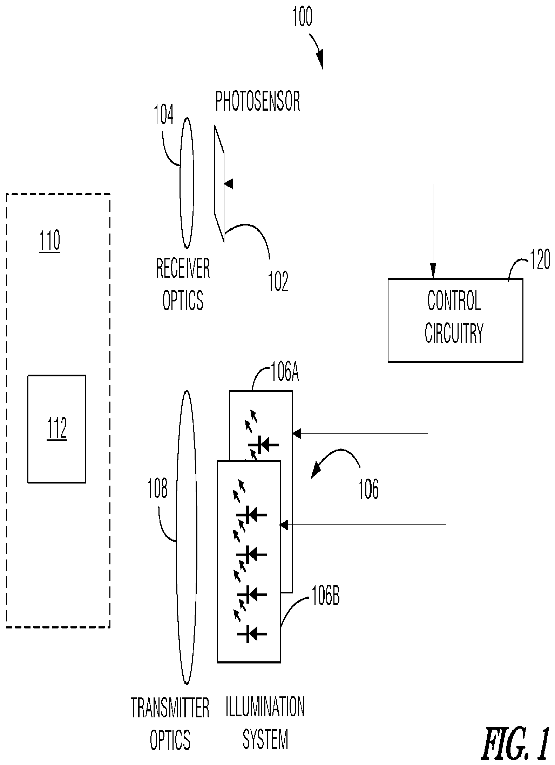

Aspects of the present disclosure are directed to an optical sensing system and the operation thereof. An optical sensing system in the present context means a device or set of devices that include(s) a photosensor and an illumination system. FIG. 1 is a diagram illustrating an example optical sensing system 100 according to some embodiments. Optical sensing system 100 includes photosensor 102, illumination system 106, and an optical arrangement (including receiver optics 104 aligned with photosensor 102 and transmitter optics 108 aligned with illumination system 106). In addition, optical sensing system 100 includes control circuitry 120 that is interfaced with photosensor 102 and illumination system 106.

Photosensor 102 according to various embodiments may include a single photosensing element, or an array of photosensing elements. Examples of photosensing elements include complementary metal-oxide semiconductor (CMOS) sensors, charge-coupled devices (CCDs), photoresistors, quantum dot photoconductors or photodiodes, photovoltaic (PV) cells, and the like. Photosensor 102 may be constructed using any suitable technology, whether known or arising in the future. Without limitation, some other examples include highdynamic-range (HDR) sensors, hyperspectral sensors, polarized sensors, or the like.

An array of photosensing elements may include a linear array, or a 2-dimensional array (e.g., a matrix of cells of photosensing elements). In other words, photosensor 102 may be as simple as a single photodetector element, or as complex as an image sensor having millions of individual photosensing elements.

Illumination system 106 according to some embodiments includes a diverse set of photo emitters that includes at least two different types of photo emitters, depicted as 106A and 106B, that are arranged to illuminate target area 110, which may contain an object of interest 112. The different types of photo emitters 106A, 106B may be adapted to emit light in correspondingly different wavelengths. For example, a first type of photo emitter 106A may emit light in an infrared wavelength; whereas a second type of photo emitter 106B may emit light in a visible-light wavelength. In related embodiments, another type of photo emitter (not shown) may emit light in an ultraviolet wavelength. In some embodiments, multiple different photo emitters may emit correspondingly different wavelengths within a common band of the spectrum, such as in different frequencies of the infrared region of the spectrum, in different colors of the visible-light region of the spectrum, or in different frequencies of the ultraviolet spectrum.

Each photo emitter 106A, 106B may be a group of similar individual devices (as depicted) that work in unison, or may be an individual device. The different types of photo emitters of illumination system 106 may be selectively activated by control circuitry 120 to illuminate target area 110 with one or more wavelengths of the spectrum. Thus, in the example depicted, photo emitter106A may be separately controlled from photo emitter 106B. In a related embodiment, each photo emitter 106A, 106B may include two or more different types of individual photo emitter devices to produce a plurality, or range, of wavelengths that may be activated together.

Photosensor 102 is sensitive to the wavelength(s) of each photo emitter 106A, 106B. For example, photosensor 102 may be a conventional CMOS photosensor sensitive in a range that includes visible light (400-750 nm), and some wavelengths in the IR band (>750 nm), some wavelengths in the UV band (<400 nm), or both (i.e., from a wavelength shorter than 400 nm to a wavelength greater than 750 nm). In another embodiment, photosensor 102 is a wideband photo sensor that is sensitive from a wavelength that is less than 300 nm to a wavelength greater than 900 nm. In a related embodiment, photosensor 102 is sensitive in a range that includes about 200 nm to a wavelength greater than 1000 nm. In another related embodiment, photosensor 102 is sensitive in a range that includes a wavelength less than about 300 nm to a wavelength greater than 1500 nm. In a related embodiment, photosensor 102 is sensitive in a range that includes about 300 nm to a wavelength that includes about 2000 nm.

Such a broad range of sensitivity may be achieved in certain embodiments utilizing a graphene-based photosensor such as one described, for example, in Goossens S. et al., Broadband Image Sensor Array Based on Graphene-CMOS Integration, Nature Photonics 11, pages 366-371 (2017), incorporated by reference herein. Goosens S. et al., describe a phototransistor array that includes a layer of colloidal quantum dots over a graphene layer deposited over an integrated CMOS array that includes the pixel structures and read-out circuitry connected to the graphene layer utilizing vertical metal interconnects. In operation of such image sensor, light is absorbed in the quantum dot layer followed by transfer of photo-generated holes (or electrons) to the graphene, where the charge carriers circulate due to a bias voltage applied between two pixel contacts. The photo-signal is sensed as a change in the conductance of the graphene transport layer. Due to the high mobility of graphene (in the demonstrated example, ~1000 cm2/Vs), this photoconductor structure exhibits ultra-high gain of 10⁸ and responsivity above 10⁷ A/W with a spectral sensitivity of 300-2000 nm.

As a general overview of operation of optical sensing system 100, control circuitry 120 selectively activates illumination system 106 to emit light at a suitable wavelength for the application and prevailing conditions. Transmitter optics 108, which may be formed from glass, thermoplastic, or other suitable transparent material, are arranged to pass or focus the emitted light with low dispersion, to illuminate target area 110. Transmitter optics 108 may be implemented as a window, a transparent cover, an objective lens, a microlens array, or other suitable optical arrangement. The emitted and focused illumination reflects diffusely from target area 110 and any object of interest 112. Receiver optics 104 may be formed from glass, thermoplastic, or other suitable transparent material, and arranged to pass or focus a portion of the light reflected from target area 110 or object of interest 112 onto photosensor 102. Receiver optics 104 may be implemented as a window, a transparent cover, an objective lens, a microlens array, or other suitable optical arrangement.

Optical sensing system 100 may be implemented and optimized for a variety of applications, such as object detection or proximity measurement, symbol reading, imaging, 3D scene scanning (e.g., LiDAR), machine vision, object inspection, microscopy, automated guided vehicles (AGVs), robotics, automated driving, and the like. Depending on the application, the output of photosensor 102 is processed by control circuitry 120 to perform the principal function. For instance, in the case of object proximity measurement, control circuitry may collect one or a series of outputs from photosensor 102, and perform triangulation or time-of-flight measurement thereupon to determine the distance to the object of interest 112. In the case of imaging, machine-vision, symbol reading, object recognition, or other application involving image capture where photosensor 102 is an image sensor, control circuitry 120 receives one or more image frames from photosensor 102, and performs image processing, or sends the image frames to another system for processing.

Aspects of the invention recognize that certain wavelengths are better suited for certain conditions (e.g., day vs. night, indoor vs. outdoor use, dust/smoke/fog/rain). Accordingly, in some embodiments, control circuitry 120 facilitate the selection of the suitable wavelength of illumination light to be emitted by illumination system 106. In some embodiments, selection of the illumination light wavelength may be performed by an operator via a user interface facilitated by control circuitry 120, or by an external automated decision system via a communications facility implemented in control circuitry 120. In other embodiments, control circuitry 120 includes a decision system that autonomously determines the illumination wavelength selection.

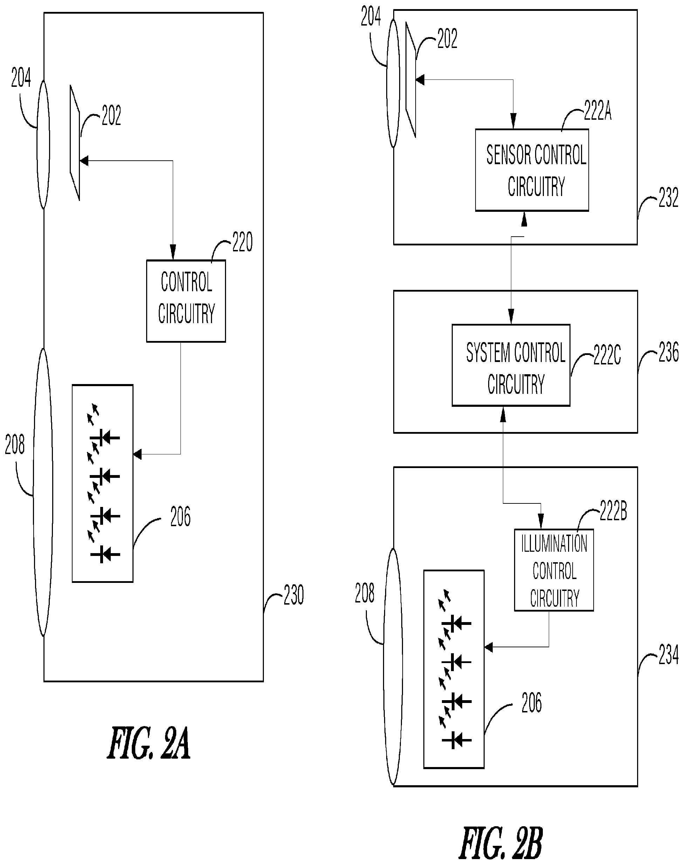

FIGs. 2A-2B illustrate various physical configurations of optical sensing system 100 according to related embodiments. FIG. 2A illustrates a centralized configuration comprising a single device enclosure 230 containing photosensor 202, receiver optics 204, illumination system 206, transmitter optics 208, and control circuitry 220, which are all analogous to similarly-named components described above with reference to FIG. 1. In this configuration, controller circuitry 220 controls or facilitates selection of the illumination wavelength to be emitted by illumination system 206 based on the output of photosensor 202 that is processed locally by control circuitry 220. For instance, control circuitry 220 obtains the output from photosensor 202 and may process such output to determine the prevailing condition(s), such as ambient light level, scattering of light, obstructions or sources or extent of light dispersion, "hazing" effect, etc., depending on the capability of photosensor 202. In a related embodiment, control circuitry 220 assesses the performance of sensor 202 under the prevailing conditions.

FIG. 2B illustrates a distributed configuration comprising separate enclosures 232, 234, and 236, which may be situated remotely from one another. Enclosure 232 contains photosensor 202 and receiver optics 204, along with sensor control circuitry 222A. Enclosure 234 contains illumination system 206 and transmitter optics 208, along with illumination control circuitry 222B. Enclosure 236 contains system control circuitry 222C, which is communicatively coupled to sensor control circuitry 222A and to illumination control circuitry 222B.

In this example embodiment, photosensor 202 is in a separate device from that of illumination system 206 that is operative to emit selective-wavelength illumination of the target area monitored by photosensor 202. Illumination control circuitry 222B is operative to receive commands indicating the wavelength(s) for the illumination to be emitted, and to activate the appropriate photo emitter(s) to carry out such commands. In a more basic embodiment, illumination control circuitry 222B comprises only addressable circuitry for receiving an activation signal and for selectively powering the illumination system 206 (i.e., illumination control circuitry 222B need not include instruction decoding facilities). In this simpler implementation, different addressable instances of illumination control circuitry 222B may be associated with corresponding illumination systems 206, such as those which emit different wavelengths of illumination.

Sensor control circuitry 222A obtains the output from photosensor 202 and may process such output to determine the prevailing condition(s), such as ambient light level, scattering of light, obstructions or sources or extent of light dispersion, "hazing" effect, etc., depending on the capability of photosensor 202. In a related embodiment, sensor control circuitry 222A assesses the performance of sensor 202 under the prevailing conditions.

As depicted in the example of FIG. 2B, system control circuitry 222C is in enclosure 236, which is separate from enclosures 232 and 234. In related embodiments, system control circuitry may be implemented in one or both of enclosures 232 or 234 as part of sensor control circuitry, 222A, illumination control circuitry 222B, or both.

System control circuitry 222C is operative to coordinate the operation of sensor control circuitry 222A and illumination control circuitry 222B, and may compute a determination of wavelength selection for illumination system 206 to emit. System control circuitry 222C may be implemented on a remote server, cloud service, or other type of computing node or distributed system that is communicatively coupled to sensor control circuitry 222A and to illumination control circuitry 222B via a communications network such as an Internet-protocol (IP) network, a radio access network (RAN) such as the evolved universal mobile telecommunications system terrestrial radio access network (EUTRAN), a personal-area network (PAN), a controller area network (CAN), a universal serial bus (USB), or other suitable communications network, bus, or interconnect.

In a related embodiment (not shown), the arrangement of FIG. 2A, in which photosensor 202, illumination system 206, and control circuitry 220 are in a single enclosure, is further operatively coupled to separate system control circuitry 222C via a communications network. In this embodiment, control circuitry 220 coordinates certain operations of photosensor 202 and illumination system 206, but may omit certain other operations, such as those that require higher compute power (e.g., image processing, object recognition, training of a neural network or other machine-learning system, symbol reading, assessment of performance of photosensor 202 under the prevailing conditions). These computationally-expensive operations may instead be carried out by system control circuitry 222C, which may be implemented as a server, cloud service, or other computing system operatively coupled to system 100 via a local or wide-area network.

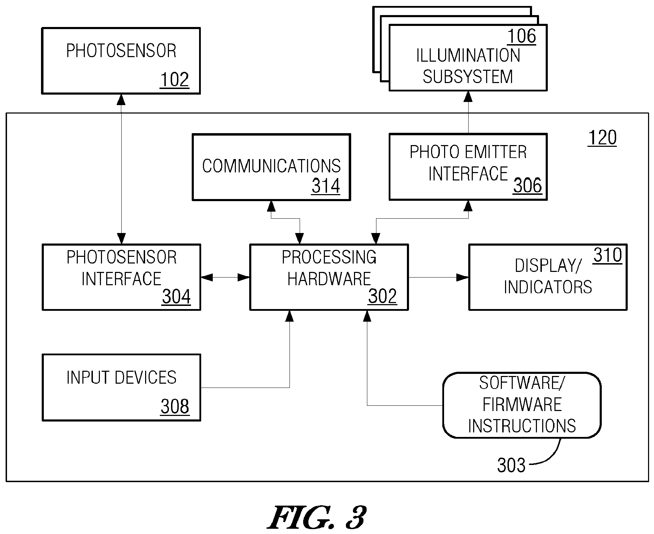

FIG. 3 is a high-level block diagram illustrating an example system architecture of optical sensing system 100, with various components of control circuitry 120 shown. Control circuitry 120 includes processing hardware 302 operatively coupled to photosensor interface 304, input devices 308, display or indicators 310, communications circuitry 314, and photo emitter interface 306. Processing hardware 302 includes one or more processor circuits that execute software or firmware instructions 303, with the latter being stored in a non-transitory machine-readable medium such as a read-only memory, flash memory, random-access memory, or the like.

Control circuitry 120 includes various engines, each of which is configured to carry out a function or set of functions, as detailed below. The term "engine" as used herein means a tangible device, component, or arrangement of components implemented using hardware, such as by an application specific integrated circuit (ASIC) or field-programmable gate array (FPGA), Complex Programmable Logic Device(CPLD), for example, or as a combination of hardware and software, such as by a processor-based computing platform and a set of program instructions that transform the computing platform into a special-purpose device to implement the particular functionality. An engine may also be implemented as a combination of the two, with certain functions facilitated by hardware alone, and other functions facilitated by a combination of hardware and software.

In an example, the software may reside in executable or non-executable form on a tangible machine-readable storage medium. Software residing in non-executable form may be compiled, translated, or otherwise converted to an executable form prior to, or during, runtime. In an example, the software, when executed by the underlying hardware of the engine, causes the hardware to perform the specified operations. Accordingly, an engine is specifically configured (e.g., hardwired), or temporarily configured (e.g., programmed) to operate in a specified manner or to perform part or all of any operations described herein in connection with that engine.

In examples in which engines are temporarily configured, each of the engines may be instantiated at different moments in time. For example, where the engines comprise a general-purpose hardware processor core configured using software; the general-purpose hardware processor core may be configured as respective different engines at different times. Software may accordingly configure a hardware processor core, for example, to constitute a particular engine at one instance of time and to constitute a different engine at a different instance of time.

In certain implementations, at least a portion, and in some cases, all, of an engine may be executed on the processor(s) of one or more computers that execute an operating system, system programs, and application programs, while also implementing the engine using multitasking, multithreading, distributed (e.g., cluster, peer-peer, cloud, etc.) processing where appropriate, or other such techniques. Accordingly, each engine may be realized in a variety of suitable configurations, and should generally not be limited to any particular implementation exemplified herein, unless such limitations are expressly called out.

In addition, an engine may itself be composed of more than one sub-engines, each of which may be regarded as an engine in its own right. Moreover, in the embodiments described herein, each of the various engines corresponds to a defined functionality; however, it should be understood that in other contemplated embodiments, each functionality may be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Photosensor interface 304 includes circuitry facilitating the exchange of data between processing hardware 302 and photosensor 102. In some examples, photosensor interface 304 includes data buffers, video decoders, video encoders, address and data bus interfaces, serial data receiver/transmitter circuitry, analog-to-digital (A/D) converter circuitry, and the like. The data communications portions of photosensor interface 304 may facilitate wired or wireless communication. Photosensor interface 304 is operative to pass its output (e.g., activated pixels, images, video frames) from their original format as output by photosensor 102 to processing hardware 302 in a suitable data format to be read by processing hardware 302.

In a related example, photosensor interface 304 may additionally be configured to pass information from processing hardware 302 to photosensor 102. This upstream information may include configuration commands such as sensor gain settings, frame rate, exposure control, activation/deactivation commands, etc.

In some embodiments, photosensor interface 304 may be integrated as part of a digital signal processor (DSP) device or microcontroller device. In other embodiments, photosensor interface 304 may be integrated as part of one or more photosensors 102.

Photo emitter interface 306 includes circuitry to control the operation of individual ones, or groups, of the photo emitters of illumination system 106. Photo emitter interface 306 may include current regulator circuitry, switching circuitry, or the like.

Input devices 308 include user-operable controls, such as pushbuttons, keypad, touchscreen, and the like, as well as additional sensors, such as a ranging sensor, motion sensor, accelerometer, thermometer, humidity sensor, precipitation sensor, smoke/particulate sensor etc. Display or indicators 310 include devices such as a liquid-crystal display (LCD), LED indicators, speaker or buzzer, and other suitable output devices.

Communications circuitry 314 includes wired or wireless communications facilities that provide input and output to and from processing hardware 302. Communication circuitry may include one or more of the following types of communication circuits: universal serial bus (USB), CAN, I²C, , SPI, UART, I³C, Ethernet, personal-area network such as Bluetooth according to an IEEE 802.15 standard, Wi-Fi according to an IEEE 802.11 standard, or the like.

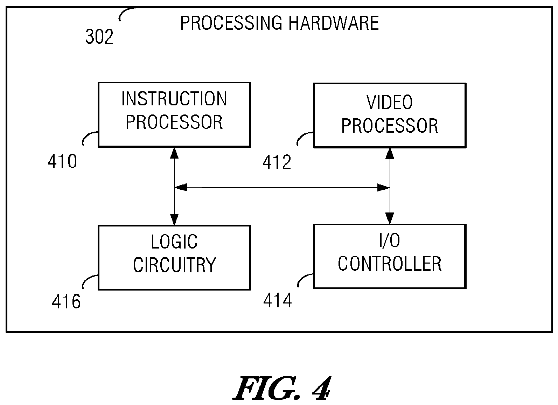

FIG. 4 is a simplified block diagram illustrating a portion of processing hardware 302 of control circuitry 120 according to one example. Processing hardware 302 includes instruction processor 410, video processor 412, and input/output (I/O) controller 414. Instruction processor 410 is constructed to execute software or firmware instructions 303, the execution of which causes instruction processor 410 to implement engines to carry out the overall functionality of optical sensing system 100 in conjunction with the other components of control circuitry120, photosensor 102, and illumination system 106 as shown in FIG. 3. For instance, instruction processor 410 may read input devices 308 and take actions in response to those inputs; instruction processor 410 may write output to display or indicators 310; and instruction processor 410 may exchange data with communications circuitry 314 to send and receive data to or from other devices. In addition, instructions 303, when executed by instruction processor 410, may cause instruction processor 410 to carry out prevailing-condition assessment, photosensor performance assessment, illumination wavelength selection, image processing, ranging determination (e.g., triangulation) and myriad other operations relating to the application of optical sensing system 100.

Instruction processor 410 may be of any suitable architecture. As an example, instruction processor 410 may include a central processing unit (CPU) core, RAM, non-volatile memory, memory controllers, address and data (or shared) busses, serial communications ports such a universal synchronous receiver/transmitter (UART), and peripheral circuitry such as timers, event counters, A/D or D/A converters, pulse-width modulation (PWM) generator, etc.

Video processor 412 is interfaced with instruction processor 410, and implements engines to receive captured images from photosensor 102, and to resample, crop, compress, or combine portions of images, filter, evaluate visual characteristics of the captured images, determine the location of captured visual elements within the image frame (such as the location of the aimer spot produced by aimer transmitter 212), and perform symbol reading or object detection algorithms, where applicable. In some embodiments, video processor 412 includes a digital signal processor (DSP) core having a computing architecture that is optimized for video processing and including additional or specialized arithmetic logic units (ALUs) - direct-memory access, fixed-point arithmetic, etc. , ASIC, FPGA, CPLD, or combination thereof.

I/O controller 414 includes circuitry that facilitates addressing, data transfer, memory access, and other interactions between instruction processor 410, video processor 412, and the other components of control circuitry 120. As examples, I/O controller 414 may include a bus or system interconnect controller, a serial communications hub controller, or the like.

In related embodiments, instruction processor 410 and video processor 412 are integrated as a single processing device, such as a digital signal controller (DSC) that is configured to perform the respective functionality of instruction processor 410 and video processor 412 described above. Similarly, I/O controller 414 may also be integrated as part of a DSC implementation. In other related embodiments, some portion of processing hardware 302 may be implemented with logic circuitry 416, such as an application-specific integrated circuit (ASIC), FPGA, CPLD, hardware coprocessor, or the like. Logic circuitry 416 may be utilized to perform certain operations with greater speed or power efficiency than can be conventionally achieved using an instruction processor, such as image filtering, image frame combining, triangulation, or the like.

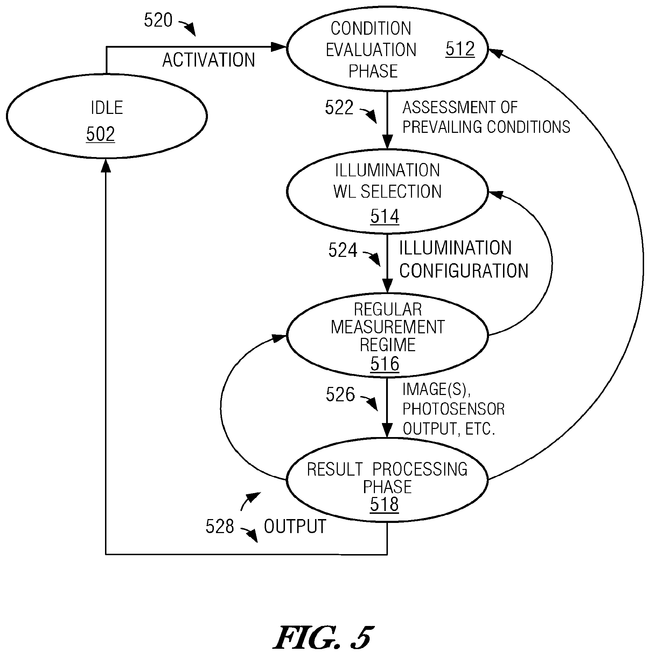

FIG. 5 is a high-level state diagram illustrating a simplified operational regime of control circuitry 120 of optical sensing system 100 according to an example embodiment. The states include idle state 502, and operational states which include condition-evaluation phase 512, illumination wavelength selection phase 514, regular measurement regime 516, and result processing phase 518.

Condition-evaluation phase 512 is initiated upon activation of optical sensing system 100 at 520, or as a new iteration following result-processing phase 518. In condition-evaluation phase 512, control circuitry 120 reads photosensor 102 and, where available, other sensors, to determine the prevailing conditions affecting the performance of photosensor 102. Such conditions may include ambient light level, presence of specular reflections, smoke, dust, fog, rain, snow, dirt or other residue on windows/lenses of the optical sensing system, obstructions, or the like. In some embodiments, selective-wavelength illumination is activated as part of condition-evaluation phase 512 to test performance of photosensor 102 in conjunction with the various wavelengths of the emitted light from illumination system 106 in the currentlyprevailing conditions. In some embodiments, condition-evaluation phase 512 uses output 528 produced as a result of result-processing phase 518 as an additional input for the condition-evaluation algorithm. Condition-evaluation phase 512 produces assessment of prevailing conditions 522.

In illumination wavelength selection phase 514, control circuitry 120 receives or determines the wavelength(s) of illumination light to be emitted by illumination system 106. This determination may be based on the assessment of the prevailing conditions 522, operational objective of optical sensing system 100 (e.g., selection of an appropriate wavelength of illumination to facilitate object inspection particularized to imaging of specific material(s) which are fluorescent or absorptive with respect to certain wavelength(s)), or based on a combination of prevailing conditions and operational objective. Embodiments of determination algorithms carried out by control circuitry 120 in illumination wavelength selection are described in detail below. The output of illumination wavelength selection phase 514 is an indication of illumination configuration 524, which may be a command that is provided to illumination system 106 to activate the appropriate photo emitter(s).

Regular measurement operating regime 516 is an operational state of control circuitry 120 in which optical sensing system 100 is operated to carry out optical detections, measurements, imaging, scanning, or the like, using the illumination configuration 524. The output 526 of regular measurement regime 516, includes the captured image(s) or video frame(s), photosensor activation information, or the like, depending on the nature of the application being provided by optical sensing system 100.

Result processing phase 518 is an operational state of control circuitry 120 in which output 526 is processed to produce a ranging measurement, output image or video frame, object detection, symbol reading, or the like, to carry out the application of optical sensing system 100. The resulting output 528, may be communicated to a receiving device via communications circuitry 314, or presented to a user via display or indicators 310, for example. The state sequence may iterate to condition evaluation phase 512, or to regular measurement regime 516, following result processing phase 518, or the system state may revert to idle state 502.

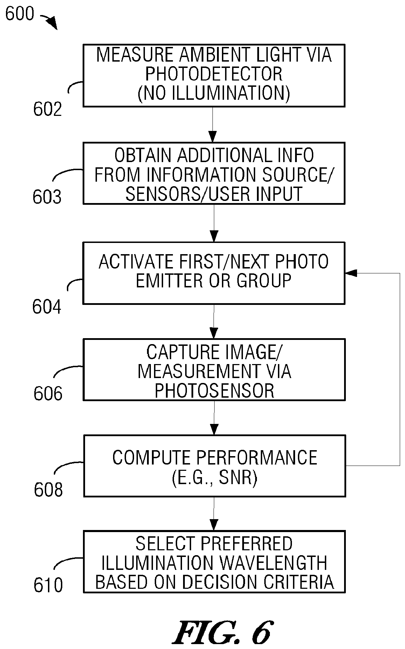

FIG. 6 is a flow diagram illustrating some of the operations of condition evaluation phase 512 and illumination wavelength selection phase 514, which may be carried out by control circuitry 120 according to some embodiments. At 602, control circuitry 120 measures the ambient light using photodetector 102 to carry out at least a portion of condition evaluation phase 512. During this measurement illumination system 106 is not used. The ambient light measurement may be a simple intensity measurement across the pixels or photosensing elements of photosensor 102, or it may take into account the spectral power distribution, which provides additional information about the characteristics of the ambient light (e.g., color temperature, UV/IR components). The value(s) representing the ambient light measurement is/are saved in memory for use in performance estimation.

At 603, where available, control circuitry 120 collects additional information pertaining to the prevailing conditions, which may also be part of condition evaluation phase 512. Such additional information may be received via communications circuitry 314 from an external source, such as a weather service. In a related embodiment, the additional information may be obtained from any available additional sensor(s) that may be interfaced with control circuitry 120. For example, the additional sensor(s) may include an environmental sensor such as a smoke/particulate detection device, thermometer, humidity sensor, precipitation sensor, or the like. Further, the additional information may be observational data entered by an operator via a user interface such as input devices 308.

At operations 604-610 the illumination wavelength selection 514 is implemented according to the illustrated example. In the sequence of operations 604-608, different photo emitters (or groups of photo emitters) of illumination system 106 are activated in sequence to test the performance of photosensor 102 under such various illumination wavelengths. Accordingly, at 604, the first (or next-in-sequence) photo emitter or group of photo emitters is activated. While the target area is under illumination of that photo emitter or photo emitter group, at 606, photosensor 102 is used to capture an image or measure the received light intensity. At 608, the control circuitry 120 analyzes the captured image or measurement made at 606 to compute the performance of photosensor 102 in the test conditions. In one type of embodiment, a signal-to-noise (SNR)-based computation is performed. The SNR-based computation may be referenced to the ambient-light measurement first made at 602. The sequence of operations of 604-608 is iterated with different wavelengths of illumination to test the corresponding performance at each illumination wavelength, and the computation result for each iteration may be saved in a suitable data structure.

In a related embodiment, the set of available wavelengths of illumination light to be tested may be reduced according to the mode of operation for the present application of optical sensing system 100. For instance, a particular object-inspection procedure may call for ultraviolet and visible-light spectra, in which case infrared wavelengths may be omitted from the set of wavelengths to be tested at 604-608. In a different application at a later instance, the same optical sensing system 100 may be called upon without restriction of wavelength of interest, in which case the full set of illumination wavelengths may be tested.

At 610, the performance measurements computed and collected at each iteration of operation 608 are analyzed to select the preferred wavelength. The selection may be based on predefined decision criteria. The decision criteria may be as simple as calling for the wavelength that produces the greatest SNR. In other embodiments, the decision criteria may be more sophisticated, such as defining a set of various performance measures (e.g., SNR, received signal intensity, integration time, signal quality, projection range, reflectivity from target surface, absorptivity into target surface) and further assigning relative weights of those performance measures, such that the preferred wavelength is selected based on a combination of such factors. The result of operation 610 is an indication of illumination configuration 524.

In a related embodiment, operations 604-610 are performed when an object of interest 112 is present in target area 110, and portions of the additional measurement and processing of operational states 516 and 518 are performed as part of the iterative testing. For instance, target object localization (i.e., processing of captured image frame(s) to identify the location within the image frame(s) of the object of interest 112) may be performed. Likewise, a target object 112 that contains one or more machine-readable symbols, such as labels, barcodes, 2D symbols, printed characters, handwriting, etc., may be localized and further an attempt may be made to read or decode such symbol(s). The detectability or decodeability may be assessed during this process, and the rate of convergence on a machine reading or decoding of such symbol may be quantified as a measure of performance.

While the disclosure is susceptible to various modifications and alternative forms, specific embodiments have been shown by way of example in the drawings and have been described in detail herein. However, the disclosure is not limited to the particular forms disclosed. Rather, the disclosure is to cover all modifications, equivalents, and alternatives falling within the scope of the following appended claims and their legal equivalents.

### Additional Notes and Examples

Example 1 is an optical sensing system, comprising: an illumination system including a plurality of photo emitters, wherein the illumination system includes a first group of at least one photo emitter selectively operative to emit light at a first wavelength, and a second group of at least one photo emitter selectively operative to emit light at a second wavelength that is different from the first wavelength; a photosensor that is sensitive over a range that includes an ultraviolet band and an infrared band, the range comprising the first wavelength and the second wavelength; the illumination system and the photosensor being arranged such that emitted light from the illumination system is directed towards a target area, and a portion of the emitted light is reflected from the target area and received by the photosensor; and control circuitry operatively coupled to the illumination system and to the photosensor, the control circuitry operative to autonomously select a preferred at least one wavelength of the emitted light from among the first wavelength and the second wavelength based on assessed comparative performance of the photosensor in conjunction with the emitted light of the first wavelength and of the second wavelength in currently prevailing conditions.

In Example 2, the subject matter of Example 1 includes, wherein the control circuitry is operative to perform assessment to produce the assessed comparative performance.

In Example 3, the subject matter of Examples 1-2 includes, wherein the assessed comparative performance is produced based on sequential activation of the first group of at least one photo emitter and the second group of at least one photo emitter, under control of the control circuitry, while the photosensor receives the reflected portion of the emitted light from the target area, to thereby produce a first set of photosensor output based on the sequential activation of different wavelengths of the emitted light.

In Example 4, the subject matter of Example 3 includes, wherein the assessed comparative performance is produced based on an ambient-light measurement by the photosensor under control of the control circuitry while the illumination system emits no light.

In Example 5, the subject matter of Examples 3-4 includes, wherein the assessed comparative performance is produced based at least in part on the first set of photosensor output.

In Example 6, the subject matter of Examples 3-5 includes, wherein the assessed comparative performance is produced based at least in part on an output from an environmental sensor.

In Example 7, the subject matter of Examples 5-6 includes, wherein optical sensing system is part of an imaging system and wherein the control circuitry is operative to process output of the photosensor to produce an image of any object of interest in the target area; and wherein the assessed comparative performance is produced based at least in part on an assessed quality of the image.

In Example 8, the subject matter of Examples 5-7 includes, wherein optical sensing system is part of a ranging system and wherein the control circuitry is operative to process output of the photosensor to produce a distance measurement to any object of interest in the target area; and wherein the assessed comparative performance is produced based at least in part on an assessed performance of the distance measurement production.

In Example 9, the subject matter of Examples 5-8 includes, wherein optical sensing system is part of a symbol reader system and wherein the control circuitry is operative to process output of the photosensor to produce a digital output representing a symbol visible in the target area; and wherein the assessed comparative performance is produced based at least in part on an assessed performance of the production of the digital output.

In Example 10, the subject matter of Examples 3-9 includes, wherein the control circuitry is further operative to cause the optical sensing system to perform a measurement regime in which the illumination system is operated to emit light at the preferred at least one wavelength while the photosensor is operated to receive the portion of the reflected emitted light from the target area, to thereby produce a second set of photosensor output that is based on a preferred illumination configuration.

In Example 11, the subject matter of Examples 1-10 includes, wherein the photosensor is a graphene-based photosensor.

In Example 12, the subject matter of Examples 1-11 includes, wherein the photosensor is sensitive over a range of wavelengths that includes an ultraviolet band and an infrared band of wavelengths, and wherein at least one of the first wavelength and second wavelength is in the ultraviolet band or the infrared band.

In Example 13, the subject matter of Examples 1-12 includes, wherein the photosensor is sensitive over a range of wavelengths that includes a wavelength less than 300 nm, and a wavelength of greater than 900 nm.

In Example 14, the subject matter of Examples 1-13 includes, wherein the photosensor is sensitive over a range of wavelengths that includes a wavelength of about 200 nm, and a wavelength of about 2000 nm.

In Example 15, the subject matter of Examples 1-14 includes, wherein the first wavelength is in an infrared band of greater than 1000 nm, and wherein the second wavelength is in an ultraviolet band of less than 400 nm.

Example 16 is a method for operating an optical sensing system, the method comprising: selectively emitting light, by an illumination system, at a selected wavelength from among a set of available wavelengths including a first wavelength, and a second wavelength that is different from the first wavelength, to illuminate a target area; receiving reflected light from the target area based on the selectively-emitted light by a photosensor that is sensitive over a range that includes an ultraviolet band and an infrared band, the range comprising the first wavelength and the second wavelength; and autonomously selecting a preferred at least one wavelength of the selective light emission from among the first wavelength and the second wavelength based on assessed comparative performance of the photosensor in conjunction with the emitted light of the first wavelength and of the second wavelength in currently prevailing conditions.

In Example 17, the subject matter of Example 16 includes, autonomously performing an assessment to produce the assessed comparative performance.

In Example 18, the subject matter of Example 16 or 17 includes, wherein performing the assessment includes sequentially emitting the first wavelength and the second wavelength by the illumination system, while the photosensor receives the reflected light from the target area, to thereby produce a first set of photosensor output based on the sequential activation of different wavelengths of the emitted light.

In Example 19, the subject matter of Example 18 includes, wherein the assessed comparative performance is produced based on an ambient-light measurement by the photosensor in an absence of any emitted light from the illumination system.

In Example 20, the subject matter of Examples 18-19 includes, wherein the assessed comparative performance is produced based at least in part on the first set of photosensor output.

Example 21 is at least one machine-readable medium including instructions that, when executed by processing circuitry, cause the processing circuitry to perform operations to implement of any of Examples 16-20.

Example 22 is an apparatus comprising means to implement of any of Examples 1-20.

Example 23 is a system to implement of any of Examples 16-20.

Example 24 is a method to implement of any of Examples 1-15.

Persons of ordinary skill in the relevant arts will recognize that the invention may comprise fewer features than illustrated in any individual embodiment described above. The embodiments described herein are not meant to be an exhaustive presentation of the ways in which the various features of the invention may be combined. Accordingly, the embodiments are not mutually exclusive combinations of features; rather, the invention may comprise a combination of different individual features selected from different individual embodiments, as will be understood by persons of ordinary skill in the art.

Any incorporation by reference of documents above is limited such that no subject matter is incorporated that is contrary to the explicit disclosure herein. Any incorporation by reference of documents above is further limited such that no claims that are included in the documents are incorporated by reference into the claims of the present Application. The claims of any of the documents are, however, incorporated as part of the disclosure herein, unless specifically excluded. Any incorporation by reference of documents above is yet further limited such that any definitions provided in the documents are not incorporated by reference herein unless expressly included herein.

## Claims

1. An optical sensing system, comprising:
an illumination system including a plurality of photo emitters, wherein the illumination system includes a first group of at least one photo emitter selectively operative to emit light at a first wavelength, and a second group of at least one photo emitter selectively operative to emit light at a second wavelength that is different from the first wavelength;
a photosensor that is sensitive over a range that includes an ultraviolet band and an infrared band, the range comprising the first wavelength and the second wavelength;
the illumination system and the photosensor being arranged such that emitted light from the illumination system is directed towards a target area, and a portion of the emitted light is reflected from the target area and received by the photosensor; and
control circuitry operatively coupled to the illumination system and to the photosensor, the control circuitry operative to autonomously select a preferred at least one wavelength of the emitted light from among the first wavelength and the second wavelength based on assessed comparative performance of the photosensor in conjunction with the emitted light of the first wavelength and of the second wavelength in currently prevailing conditions.

2. The optical sensing system of claim 1, wherein the control circuitry is operative to perform assessment to produce the assessed comparative performance.

3. The optical sensing system of claim 1 or 2, wherein the assessed comparative performance is produced based on sequential activation of the first group of at least one photo emitter and the second group of at least one photo emitter, under control of the control circuitry, while the photosensor receives the reflected portion of the emitted light from the target area, to thereby produce a first set of photosensor output based on the sequential activation of different wavelengths of the emitted light.

4. The optical sensing system of claim 3, wherein the assessed comparative performance is produced based on an ambient-light measurement by the photosensor under control of the control circuitry while the illumination system emits no light.

5. The optical sensing system of any of claims 3-4, wherein the assessed comparative performance is produced based at least in part on the first set of photosensor output.

6. The optical sensing system of any of claims 3-5, wherein the assessed comparative performance is produced based at least in part on an output from an environmental sensor.

7. The optical sensing system of any of claims 5-6, wherein
(i) optical sensing system is part of an imaging system and wherein the control circuitry is operative to process output of the photosensor to produce an image of any object of interest in the target area; and
wherein the assessed comparative performance is produced based at least in part on an assessed quality of the image; and/or
(ii) wherein optical sensing system is part of a ranging system and wherein the control circuitry is operative to process output of the photosensor to produce a distance measurement to any object of interest in the target area; and
wherein the assessed comparative performance is produced based at least in part on an assessed performance of the distance measurement production; and/or
(iii) wherein optical sensing system is part of a symbol reader system and wherein the control circuitry is operative to process output of the photosensor to produce a digital output representing a symbol visible in the target area; and
wherein the assessed comparative performance is produced based at least in part on an assessed performance of the production of the digital output.

8. The optical sensing system of any of claims 3-7, wherein the control circuitry is further operative to cause the optical sensing system to perform a measurement regime in which the illumination system is operated to emit light at the preferred at least one wavelength while the photosensor is operated to receive the portion of the reflected emitted light from the target area, to thereby produce a second set of photosensor output that is based on a preferred illumination configuration.

9. The optical sensing system of any of claims 1-8, wherein the photosensor is a graphene-based photosensor.

10. The optical sensing system of any of claims 1-9, wherein at least one of the first wavelength and second wavelength is in the ultraviolet band or the infrared band,
preferably wherein the first wavelength is in an infrared band of greater than 1000 nm, and the second wavelength is in an ultraviolet band of less than 400 nm.

11. The optical sensing system of any of claims 1-10, wherein the photosensor is sensitive over a range of wavelengths that includes a wavelength less than 300 nm, and a wavelength of greater than 900 nm, preferably wherein the photosensor is sensitive over a range of wavelengths that includes a wavelength of about 200 nm, and a wavelength of about 2000 nm.

12. A method for operating an optical sensing system, the method comprising:
selectively emitting light, by an illumination system, at a selected wavelength from among a set of available wavelengths including a first wavelength, and a second wavelength that is different from the first wavelength, to illuminate a target area;
receiving reflected light from the target area based on the selectively-emitted light by a photosensor that is sensitive over a range that includes an ultraviolet band and an infrared band, the range comprising the first wavelength and the second wavelength; and
autonomously selecting a preferred at least one wavelength of the selective light emission from among the first wavelength and the second wavelength based on assessed comparative performance of the photosensor in conjunction with the emitted light of the first wavelength and of the second wavelength in currently prevailing conditions.

13. The method of claim 12, further comprising:
autonomously performing an assessment to produce the assessed comparative performance.

14. The method of any of claims 12-13, wherein performing the assessment includes sequentially emitting the first wavelength and the second wavelength by the illumination system, while the photosensor receives the reflected light from the target area, to thereby produce a first set of photosensor output based on the sequential activation of different wavelengths of the emitted light.

15. The method of claim 14, wherein the assessed comparative performance is produced based on an ambient-light measurement by the photosensor in an absence of any emitted light from the illumination system and/or wherein the assessed comparative performance is produced based at least in part on the first set of photosensor output.
